# EUROPEAN PATENT APPLICATION

(11) **EP 0 631 865 A1**
(43) Date of publication of application: **04.01.1995**
(21) Application number: 93119173.8
(22) Date of filing: 29.11.1993
(51) Int. Cl.: B32B 29/08, B32B 5/26, B32B 29/02, E04C 2/16, E04C 2/24, E04B 1/94

(54) **Panel particularly for fireproof partition walls and process for manufacturing it**

(30) Priority: 28.06.1993 IT PD930147
(71) Applicant: O.R.V. OVATTIFICIO RESINATURA VALPADANA S.p.A., I-35010 Grantorto, Padova (IT)
(72) Inventor: Peruzzo, Lorenzo, I-36061 Bassano Del Grappa (Vicenza) (IT)
(74) Representative: Modiano, Guido, Dr.-Ing.

(57) **Abstract**

A panel particularly but not exclusively usable for fireproof partition walls and process for manufacturing it. The panel comprises at least two sandwiches (117,118) made of heat-bonded regenerated natural and/or synthetic textile fibers and/or made of heat-bonded synthetic and/or natural fibers. At least one sheet of corrugated cardboard (116), coupled to, and arranged between, composite heat insulation sheets (119,120), is arranged between these sandwiches. The process for manufacturing the panel comprises steps for compressing the sandwiches while heat is applied and a step for coupling, by means of adhesives, to the at least one sheet of corrugated cardboard and/or one or more composite thermal insulation sheets.

## Description

The present invention relates to a panel particularly but not exclusively usable for fireproof partition walls and to the process for manufacturing it.

Panels substantially constituted by an internal layer of glass wool, interposed between layers of chipwood and externally covered with layers of melaminic and/or phenolic resins, are currently used for the partition walls of offices, exhibition stands etc.

Although extensively used, these panels are not free from drawbacks, the foremost of which is the use of glass wool, which is a non-ecological and non-recyclable material.

Other drawbacks observed with the use of these panels arise from the considerable thickness and high unit weight per unit surface (g/m²) characterizing them.

Another drawback is the need to make the installer assemble their components (usually three), with all the consequent problems.

The aim of the present invention is to provide a panel, particularly for partition walls, that overcomes the drawbacks described above in known types.

A consequent primary object is to provide a process that allows to manufacture the panel without particular technical problems and economically.

Another important object is to provide a panel which is highly heat-resistant and highly sound-proofing in a limited thickness.

Another object is to provide a panel which can be manufactured with conventional equipment and facilities.

This aim, these objects and others which will become apparent hereinafter are achieved by a panel particularly for fireproof partition walls, characterized in that it comprises at least one sheet of corrugated cardboard between at least two sandwiches made of heat-bonded regenerated natural and/or synthetic textile fibers and/or made of heat-bonded synthetic and/or natural fibers having a porous structure; and by a process for manufacturing said panel, consisting in:
-- compressing each sandwich while heat is applied;
-- coupling the unit to said at least one central sheet of corrugated cardboard and/or one or more composite thermal insulation sheets by means of adhesives.

Further characteristics and advantages of the present invention will become apparent from the following detailed description of two embodiments of the panel and of the operating steps of its manufacturing process, illustrated only by way of non-limitative example in the accompanying drawings, wherein:
figure 1 is a sectional view of a first embodiment of the panel;
figure 2 is a sectional view of a second embodiment of the panel.

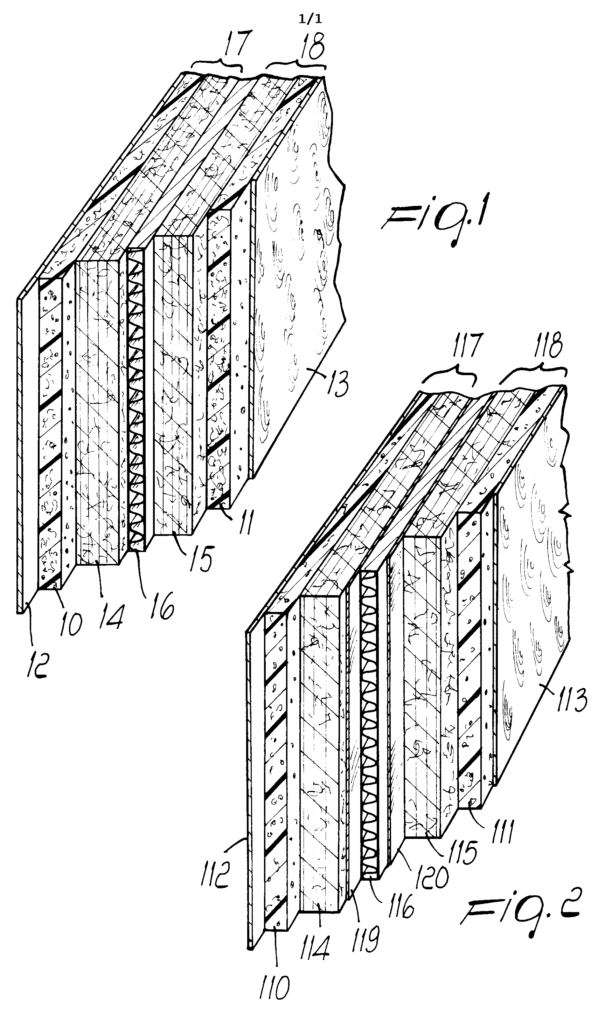

With reference to the above figure 1, a panel, particularly for partition walls of offices, exhibition stands etc., comprises, in a first embodiment, two outer layers, respectively designated by the reference numerals 10 and 11, which are composed of heat-bonded regenerated natural and/or synthetic textile fibers.

These layers 10 and 11 are externally covered with respective sheets 12 and 13 made of embossed aluminum or steel sheeting with a thickness of at least 0.4 mm.

Adhesives may be provided between the layers 10 and 11 and the respective sheets 12 and 13.

Two compact inner layers 14 and 15 having a porous structure, made of heat-bonded synthetic and/or natural fibers, are placed between the outer layers 10 and 11, forming respective sandwiches 17 and 18 together with said outer layers.

The layers 14 and 15 are preferably made of regenerated broken polyester or of virgin material made of polyester and/or natural and synthetic fibers.

A thermal binder, such as polypropylene, polyester or an equivalent thermoplastic binder, is used as binder.

A sheet 16 of corrugated cardboard is inserted between the inner layers 14 and 15.

The various layers are joined by compressing, by means of hot plates, the inner layers 14 and 15, together with the cardboard sheet 16, between the outer layers 10 and 11 with the associated aluminum sheets 12 and 13.

The temperature must be sufficient to activate the binders.

The temperature inside the layers 14 and 15 decreases inwardly from the regions adjacent to the outer layers 10 and 11.

This entails higher compaction of the outer regions with respect to the center.

The binders also have the purpose of joining the layers 10 and 11 to the layers 14 and 15, obtaining a single unit.

Adhesives may be provided between the layers 14, 15 and the layers 10, 11 and between the layers 14, 15 and the cardboard sheet 16.

The unit is very compact, has a porous structure and high heat resistance, in addition to a high sound-proofing, and also has a limited thickness.

With reference now to the above described figure 2, in a second embodiment there are again two layers 110 and 111, such as the preceding ones 10 and 11, which are externally covered with metal sheets 112 and 113, two inner layers 114 and 115, of the type of the preceding ones 14 and 15, and a sheet of corrugated cardboard 116.

The layers 110 and 114 and respectively 111 and 115 compose corresponding sandwiches 117 and 118.

In this case, however, the cardboard sheet 116 is coupled and arranged between composite thermal insulation sheets 119 and 120, each one of which comprises at least one aluminum layer interlaid between carbon fiber layers with the possible presence of a porous felt.

The various layers of these composite sheets have at least one adhesive-coated side which allows their assembly.

As regards the process for manufacturing the second embodiment of the panel, it is substantially equivalent to the preceding one, and consists of combined compression and heating of the outer and inner layers and of the coupling of the assembly to the corrugated cardboard sheet and to the composite sheets by means of adhesives.

For applications in which the material must be deformable while preserving its fire-resistance and sound-proofing characteristics, it is possible to manufacture a panel having only the two sandwiches 117 and 118 and a composite heat insulation sheet between them.

In practice it has been observed that the above described panel, in both of its embodiments, has achieved the intended aim and objects of the present invention.

The invention thus conceived is susceptible to numerous modifications and variations, all of which are within the scope of the inventive concept.

All the details may furthermore be replaced with other technically equivalent elements.

The operating steps of the process may also be replaced with other technically equivalent ones.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Panel particularly for fireproof partition walls, characterized in that it comprises at least one sheet of corrugated cardboard (16,116) between at least two sandwiches (17,18,117,118) made of at least one of the following materials:
- heat-bonded regenerated natural textile fibers,
- heat-bonded regenerated synthetic textile fibers,
- heat-bonded natural fibers having a porous structure and
- heat-bonded synthetic fibers having a porous structure.

2. Panel according to claim 1, characterized in that it comprises at least one composite heat insulation sheet (119,120) arranged between said sandwiches (17,18,117,118) and said sheet of corrugated cardboard (16,116).

3. Panel according to one or more of the preceding claims, characterized in that said heat-bonded regenerated natural and/or synthetic textile fibers and said heat-bonded natural and/or synthetic fibers having a porous structure compose respective layers, two outer ones (10,11,110,111) and two inner ones (14,15,114,115), said sheet of corrugated cardboard (16,116) being arranged between said inner layers.

4. Panel according to one or more of the preceding claims, characterized in that it is covered, on at least one outer face (10,11,110,111), with at least one sheet (12,13,112,113) of metallic material.

5. Panel according to one or more of the preceding claims, characterized in that said regenerated textile fibers are pre-baked.

6. Panel according to one or more of the preceding claims, characterized in that said sheet of metallic material (12,13,112,113) is made of aluminum or steel with a thickness of at least 0.4 mm.

7. Panel according to one or more of the preceding claims, characterized in that said synthetic fibers of said inner layers (14,15,114,115) are constituted by at least one of the following materials: regenerated broken polyester material, virgin polyester material or other equivalent materials.

8. Panel according to one or more of the preceding claims, characterized in that said synthetic fibers of said innner layers (14,15,114,115) are bonded by means of at least one of the following materials: polypropylene, polyester or other equivalent thermoplastic binders.

9. Panel according to one or more of the preceding claims, characterized in that adhesives are present between said outer layers (10,11,110,111) and said at least one sheet of metallic material (12,13,112,113).

10. Panel according to one or more of the preceding claims, characterized in that adhesives can be present between said outer layers (10,11,110,111) and said inner layers (14,15,114,115).

11. Panel according to one or more of the preceding claims, characterized in that the compactness of said innner layers (14,15,114,115) decreases from the outermost regions to the innermost regions.

12. Panel according to claim 2, characterized in that each one of said composite sheets (119,120) comprises at least one aluminum layer interlaid between carbon fiber layers.

13. Panel according to claim 12, characterized in that said composite sheet (119,120) is coupled to a porous felt.

14. Panel according to claims 12 and 13, characterized in that said aluminum and/or carbon fiber layers have at least one adhesive-coated side.

15. Process for manufacturing a panel particularly for fireproof partition walls, which consists in:
-- compressing at least one sandwich (17,18,117,118) made of at least one of the following materials: heat-bonded regenerated natural textile fibers, heat-bonded regenerated synthetic textile fibers, heat-bonded natural fibers having a porous structure and heat-bonded synthetic fibers having a porous structure, under thermal treatment;
-- coupling said at least two of said sandwiches to at least one central sheet of corrugated cardboard (16,116) by means of adhesives.

16. Process according to claim 15, characterized in that one or more composite thermal insulation sheets (119,120) are coupled between said central sheet (16,116) of corrugated cardboard and said sandwiches (17,18,117,118).

17. Process according to claim 15, characterized in that the layers (10,11,14,15,110,111,114,115) that compose said sandwiches (17,18,117,118) are compressed individually.

18. Process according to claim 15, characterized in that said heat-bonded regenerated natural and/or synthetic textile fibers and said heat-bonded natural and/or synthetic fibers having a porous structure compose respective layers, two outer ones (10,11,110,111) and two inner ones (14,15,114,115), said sheet of corrugated cardboard (16,116) being arranged between said inner layers.

19. Process according to claim 18, characterized in that hot compression of said inner layers (14,15,114,115) and of said outer layers (10,11,110,111) occurs between plates which are heated to a temperature which is sufficient to activate said binders.
